# EUROPÄISCHE PATENTSCHRIFT

(11) **EP 1 412 702 B1**
(45) Veröffentlichungstag und Bekanntmachung des Hinweises auf die Patenterteilung: **29.04.2009**
(21) Anmeldenummer: 02748609.1
(22) Anmeldetag: 04.07.2002
(51) Int. Cl.: G01C 21/36

(54) **NAVIGATIONSVORRICHTUNG**
NAVIGATION DEVICE
DISPOSITIF DE NAVIGATION

(30) Priorität: 21.07.2001 DE 10135739
(43) Veröffentlichungstag der Anmeldung: 28.04.2004
(73) Patentinhaber: ROBERT BOSCH GMBH, 70442 Stuttgart (DE)
(72) Erfinder: SCHAEFER, Walter, 31134 Hildesheim (DE); HERRMANN, Peter, 31180 Giesen (DE)
(86) Internationale Anmeldenummer: PCT/DE2002/002442
(87) Internationale Veröffentlichungsnummer: WO 2003/012373

(56) Entgegenhaltungen:
- US-A- 6 088 652
- PATENT ABSTRACTS OF JAPAN vol. 1997, no. 04, 30. April 1997 (1997-04-30) -& JP 08 327373 A (SONY CORP), 13. Dezember 1996 (1996-12-13)

## Beschreibung

### Stand der Technik

Die Erfindung geht aus von einer Navigationsvorrichtung nach der Gattung des unabhängigen Anspruchs. Es sind schon Navigationsvorrichtungen bekannt, die zur Navigation eines Fahrzeugs in einem Straßennetz dienen. Über eine Ortungsvorrichtung wird eine Fahrzeugposition bestimmt und eine Fahrtroute von einem Startpunkt zu einem Fahrziel wird berechnet. Fahranweisungen mit Abbiegehinweisen werden an den Fahrer ausgegeben. Das Fahrziel wird über eine Spracheingabe oder über eine Buchstabentastatur bei Fahrtbeginn eingegeben. Ferner ist auch bekannt, Daten von Fahrzielen zu speichern und bei Fahrtbeginn aus einer Liste auszuwählen.

### Vorteile der Erfindung

Die erfindungsgemäße Navigationsvorrichtung mit den Merkmalen des unabhängigen Anspruchs hat demgegenüber den Vorteil, dass die Eingabe einer bestimmten, gespeicherten Position als ein Fahrziel stark vereinfacht wird, indem durch eine Betätigung eines vorgegebenen Bedienelements das Fahrziel gespeichert und durch eine erneute Betätigung wieder abgerufen wird, so dass dieses Fahrziel ohne einen erneute aufwendige Eingabe oder eine Auswahl aus einer Liste ausgewählt werden kann. Damit ist eine besonders schnelle Eingabe möglich, ohne dass ein Benutzer seine Eingabe genau kontrollieren oder einen angegebenen Text, z.B. einen Namen des Fahrziels, erst in einer Liste suchen muss. Dies ist insbesondere für ein häufig angefahrenes Fahrziel vorteilhaft. Vorzugsweise wird die Position einer Wohnung oder einer vorübergehenden Unterkunft gespeichert, z.B. ein Hotel im Urlaub oder während einer Geschäftsreise. Möchte ein Benutzer zu seiner Wohnung bzw. seiner Unterkunft zurückkehren, ist es für ihn ausreichend, das Bedienelement zu betätigen, um seine Wohnung als ein Fahrziel einzugeben.

Durch die in den abhängigen Ansprüchen aufgeführten Maßnahmen sind vorteilhafte Weiterbildungen und Verbesserungen der im unabhängigen Anspruch angegebenen Navigationsvorrichtung möglich. Besonders vorteilhaft ist, dass mit einer Betätigung des Bedienelements für mindestens eine vorgegebene Dauer eine aktuelle Position des Fahrzeugs speicherbar ist. Hierdurch wird die Eingabe der bestimmten Positionen erleichtert, da auch für die Eingabe auf eine manuelle Eingabe oder eine Auswahl aus einer Liste verzichtet werden kann.

Weiterhin ist vorteilhaft, dass mit dem Bedienelement eine in einer Liste dargestellte Position gespeichert werden kann, da hierdurch auch Positionen speicherbar sind, an denen sich das Fahrzeug zum Zeitpunkt des Speicherns nicht befindet.

Ferner ist vorteilhaft, dass in der Anzeige der Navigationsvorrichtung eine Karte darstellbar ist, in der die gespeicherte Position hervorgehoben darstellbar ist, da hierdurch für einen Benutzer eine Entfernung und gegebenenfalls ein Fahrweg zu dieser Position leicht erkennbar sind.

Weiterhin ist vorteilhaft, dass mit der Eingabe der gespeicherten Position als Fahrziel automatisch eine Routenführung von der aktuellen Position des Fahrzeugs zu der als Fahrziel eingegebenen, gespeicherten Position gestartet wird, ohne dass ein Benutzer hierzu eine weitere Eingabe vornehmen muss.

Weiterhin ist vorteilhaft, dass bei einer Betätigung des Bedienelements eine Entfernung und/oder eine Fahrtdauer und/oder eine Himmelsrichtung von der aktuellen Position zu der gespeicherten Position darstellbar sind. Hierdurch kann ein Benutzer jederzeit und auf einfache Weise den räumlichen und zeitlichen Abstand zu der von ihm gespeicherten Position darstellen lassen, auch wenn er sich gerade auf einer anderen Fahrtroute befindet, die die bestimmte Position nicht beinhaltet.

Vorteilhafte Ausgestaltungen des Bedienelements sind eine Drucktaste oder ein Auswahlfeld einer Bedienoberfläche in einer Anzeige der Navigationsvorrichtung. Ferner ist vorteilhaft, dass das Bedienelement aus zwei benachbarten Tasten gebildet wird, die zur Speicherung der Position bzw. zur Eingabe des Fahrziels zumindest ungefähr gleichzeitig betätigt werden müssen. Hierdurch kann auf die Anordnung zusätzlicher Tasten an einer Bedienoberfläche verzichtet werden. Ferner wird vermieden, dass durch das irrtümliche Berühren nur einer Taste eine neue Position gespeichert bzw. eine Routenberechnung zu der gespeicherten Position gestartet wird.

### Zeichnung

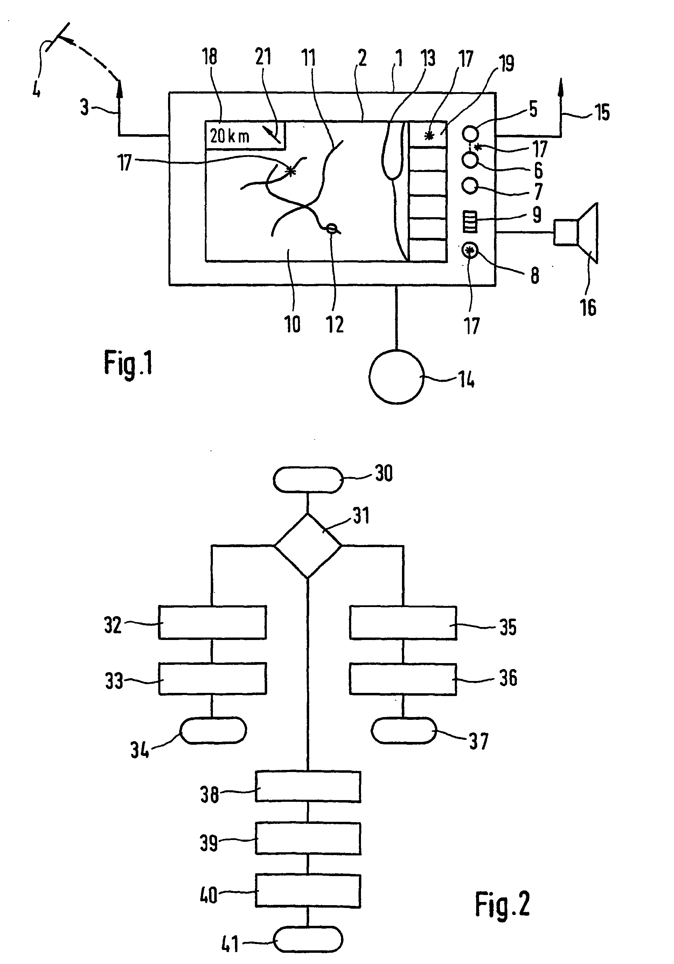

Ausführungsbeispiele der Erfindung sind in der Zeichnung dargestellt und in der nachfolgenden Beschreibung näher erläutert. Es zeigen Figur 1 eine Ansicht einer erfindungsgemäßen Navigationsvorrichtung, Figur 2 ein Ablauf eines Bedienverfahrens der erfindungsgemäßen Navigationsvorrichtung.

### Beschreibung des Ausführungsbeispiels

Die erfindungsgemäße Navigationsvorrichtung kann insbesondere in Kraftfahrzeugen verwendet werden. Jedoch ist eine Verwendung auch in beliebigen andere Fahrzeuge, so z.B. auf Schiffen, in Flugzeuge oder in Schienenfahrzeuge möglich. Außerdem kann die erfindungsgemäße Navigationsvorrichtung auch als ein portables Gerät für Radfahrer und/oder Fußgänger verwendet werden. Im Folgenden ist eine erfindungsgemäße Navigationsvorrichtung am Beispiel einer Navigationsvorrichtung für ein Kraftfahrzeug erläutert.

In der Figur 1 ist eine Navigationsvorrichtung 1 mit einer Anzeige 2 dargestellt. Die Navigationsvorrichtung 1 ist vorzugsweise in die Mittelkonsole eines Kraftfahrzeugs integriert. Die Navigationsvorrichtung 1 tritt über eine erste Antenne 3 mit einem Satelliten 4 eines Satellitenortungssystems in Verbindung, z.B. dem GPS (Global Positioning System). Ferner kann eine Fahrzeugortung auch über in der Figur 1 nicht dargestellte Fahrzeugsensoren erfolgen, wie z.B. Wegstreckenmesser oder Drehratensensoren. Die Navigationsvorrichtung 1 verfügt ferner über eine in der Figur 1 nicht dargestellte Rechenvorrichtung, die in das Gehäuse der Navigationsvorrichtung 1 integriert ist. Neben der Anzeige 2 sind Bedienelemente angeordnet: Drucktasten 5, 6, 7, 8 und ein Drehrad 9. In der Anzeige 2, die vorzugsweise als eine Flüssigkristallanzeige ausgeführt ist, ist eine Kartendarstellung 10 mit Straßen 11 und einer aktuellen Fahrzeugposition 12 anzeigbar. Neben der Kartendarstellung 10 sind variable Symbolfelder 13 dargestellt, in denen Funktionen der Navigationsvorrichtung 1 dargestellt sind. Die einzelnen Symbolfelder sind über eine Betätigung des Drehrades 9 auswählbar. Über die Bedienelemente ist ein Fahrziel in die Navigationsvorrichtung 1 eingebbar. Die Rechenvorrichtung bestimmt von der ermittelten Position unter Zugriff auf eine digitale Karte, die vorzugsweise über ein Datenträgerlaufwerk 14 der Navigationsvorrichtung 1 zugeführt wird, eine Fahrtroute von einer aktuellen Fahrzeugposition zu dem eingegebenen Fahrziel. Über eine zweite Antenne 15 werden entweder von einem Radiosender oder von einer Dienstezentrale Verkehrsmeldungen empfangen bzw. abgefragt, die bei einer Routenplanung berücksichtigt werden können. Nach Abschluß der Routenberechnung werden Fahrhinweise über die Anzeige 2 und/oder über einen Lautsprecher 16 ausgegeben, der ebenfalls mit der Navigationsvorrichtung 1 verbunden ist. In einem ersten Ausführungsbeispiel ist die vierte Drucktaste 8 als ein erfindungsgemäßes Bedienelement ausgeführt. Auf der vierten Drucktaste 8 ist ein Symbol 17 angeordnet, mit dem auf die Speicherung einer Information hingewiesen wird. Um eine einfache Darstellung zu erhalten, wurde in der Figur 1 als ein solches Symbol ein Stern gewählt. Die vierte Drucktaste 8 kann jedoch auch mit Aufschriften wie z.B. "Home", "Nach Hause" oder mit einem als Symbol dargestelltes Haus versehen sein. Das auf der vierten Drucktaste 8 dargestellte Symbol ist in vorteilhafter Weise in der Kartendarstellung 10 an der zu der vierten Drucktaste 8 gespeicherten Positionen dargestellt. Eine dritte Drucktaste 7 steht für den Aufruf weiterer Funktionen der Navigationsvorrichtung 1 zur Verfügung.

Im Folgenden wird eine Bedienung der in der Figur 1 dargestellten erfindungsgemäßen Navigationsvorrichtung erläutert. In einem Initialisierungsschritt 30 wird ermittelt, dass die vierte Drucktaste 8 gedrückt wurde. Von dem Initialisierungsschritt 30 wird zu einem Prüfschritt 31 verzweigt, in dem die Dauer ermittelt wird, wie lange die vierte Drucktaste 8 gedrückt wurde. Wird festgestellt, dass die vierte Drucktaste 8 weniger als eine Sekunde gedrückt wurde, so wird zu einem Positionsermittlungsschritt 32 verzweigt, in dem die aktuelle Fahrzeugposition bestimmt wird. In einem anschließenden Berechnungs- und Darstellungsschritt 33 wird die Entfernung von der aktuellen Fahrzeugposition zu einer gespeicherten Position berechnet. In einem Zusatzfeld 18 der Anzeige 2 wird dann die Entfernung, die in dem hier dargestellten Ausführungsbeispiel als "20 km" entsprechend einer Strecke von 20 Kilometern dargestellt ist, und eine Fahrtdauer, z.B. "10 Minuten", in der Figur 1 nicht dargestellt, angezeigt. Ferner wird eine zumindest grobe Himmelsrichtung von der aktuellen Position zu dem Fahrziel als ein Pfeil 21 dargestellt. Nach einer vorgegebenen Zeit, z.B. 15 s erlischt diese Darstellung des Zusatzfeldes 18 in der Anzeige 2 und der Verfahrensablauf wird mit einem Endschritt 34 beendet. Wird in dem Prüfschritt 31 festgestellt, dass die vierte Drucktaste 8 länger als 5s gedrückt wurde, so wird über die erste Antenne 3 eine aktuelle Fahrzeugposition in einem Ortungsschritt 35 bestimmt. In einem anschließenden Speicherschritt 36 wird die aktuell bestimmte Fahrzeugposition in einer Speichereinheit, die in die Navigationsvorrichtung 1 integriert ist, vorzugsweise nicht flüchtig gespeichert. Die Speichervorrichtung kann z.B. als ein "Read only Memory" ROM oder als ein z.B. über den Fahrzeugakkumulator gepufferter "Random Access Memory" RAM ausgeführt sein. Anschließend wird das Verfahren-mit einem Endschritt 37 beendet. Für weitere Betätigungen der vierten Drucktaste 8 oder für andere Auswahlen durch den Benutzer ist nun die ermittelte Fahrzeugposition gespeichert. Wird in dem ersten Prüfschritt 31 festgestellt, dass die vierte-Drucktaste 8 länger als 1 s jedoch weniger als 5 s gedrückt wurde, so wird in einem Ortungsschritt 38 die aktuelle Fahrzeugposition bestimmt. In einem anschließenden Routenberechnungsschritt 39 wird die Fahrtroute von der aktuellen Position des Fahrzeugs zu der gespeicherten Position bestimmt. In einem anschließenden Ausgabeschritt 40 wird eine Fahrtroute, die vorzugsweise unter Einbeziehung von Verkehrsmeldungen bestimmt wurde, an einen Benutzer über die Anzeige 2 und/oder über den Lautsprecher 16 ausgegeben. Das Verfahren wird mit einem Endschritt 41 beendet. In diesem Fall schließt sich die Ausgabe von Fahranweisungen entlang der berechneten Route an.

Anstelle oder zusätzlich zu der vierten Drucktaste 8 kann auch ein Symbolfeld 19 der Symbolfelder 13 als ein Bedienelement ausgeführt sein, in dem das Symbol 17 dargestellt ist und mit dessen Betätigung sowohl eine Fahrzeugposition speicherbar, als auch als ein Fahrziel eingebbar ist. Der Bedienablauf entspricht dabei dem anhand der Figur 2 beschriebenen Verfahren.

Anstelle der vierten Drucktaste 8 kann auch z.B. die erste Drucktaste 5 und die zweite Drucktaste 6 ein Bedienelement bilden, so dass bei einer gemeinsamen, ungefähr gleichzeitigen Betätigung der ersten Drucktaste 5 und der zweiten Drucktaste 6 eine Position gespeichert oder als ein Fahrziel eingegeben wird. Eine gemeinsame Bedienung der ersten Drucktaste 5 und der zweiten Drucktaste 6 ist eine Bezeichnung mit dem Symbol 17 gekennzeichnet.

In den Symbolfedern 13 können auch Adressen oder Namen von Orten oder Personen dargestellt werden, die über eine Betätigung des Drehrades 9 mittels eines in der Figur 1 nicht gezeigten Auswahlrahmens darstellbar sind. Schließt sich an eine solche Auswahl eine Betätigung der vierten Drucktaste 8, des aus den Drucktasten 5 und 6 gebildeten Bedienelements oder des Symbolfeldes 19 an, so wird statt der aktuellen Fahrzeugposition die in dem ausgewählten Symbolfeld angezeigte Position gespeichert. Eine Speicherung kann dabei in Form von geographischen Koordinaten, als reine Namensbezeichnung oder als Adressendatensatz erfolgen. Ferner kann auch direkt eine Position der in dem Datenträgerlaufwerk 14 eingelegten digitalen Karte gespeichert werden.

## Patentansprüche

1. Navigationsvorrichtung zur Navigation eines Fahrzeugs insbesondere in einem Straßennetz, wobei eine Fahrtroute von einem Startpunkt zu einem Zielpunkt berechenbar ist, wobei eine aktuelle Position des Fahrzeugs von der Navigationsvorrichtung ermittelbar ist, wobei eine Position durch die Betätigung eines Bedienelements speicherbar ist, **dadurch gekennzeichnet, dass** mit einer erneuten Betätigung des Bedienelements (8, 5, 6, 19) die gespeicherte Position als Fahrziel in die Navigationsvorrichtung (1) eingebbar ist.

2. Navigationsvorrichtung nach Anspruch 1, **dadurch gekennzeichnet, dass** mit einer Betätigung des Bedienelements (8, 5, 6, 19) für mindestens eine vorgegebene Dauer eine aktuelle Position (12) des Fahrzeugs speicherbar ist.

3. Navigationsvorrichtung nach einem der vorhergehenden Ansprüche, **dadurch gekennzeichnet, dass** die Navigationsvorrichtung (1) mit einer Anzeige (2) verbunden ist, dass in der Anzeige (2) Ortsbezeichnungen, Adressen und/oder geografische Punkte anzeigbar sind und dass mit einer Betätigung des Bedienelements (8, 5, 6, 19) für mindestens eine vorgegebene Dauer eine Position einer ausgewählten Ortsbezeichnung, einer Adresse und/oder eines geografischen Punkts speicherbar ist.

4. Navigationsvorrichtung nach einem der vorhergehenden Ansprüche, **dadurch gekennzeichnet, dass** in der Anzeige (2) eine Karte (10) darstellbar ist und dass in der Karte (10) die gespeicherte Position (17) hervorgehoben darstellbar ist.

5. Navigationsvorrichtung nach einem der vorhergehenden Ansprüche, **dadurch gekennzeichnet, dass** mit der Eingabe der gespeicherten Position als Fahrziel eine Routenführung von der aktuellen Position (12) des Fahrzeugs zu der gespeicherten Position automatisch startbar ist.

6. Navigationsvorrichtung nach einem der vorhergehenden Ansprüche, **dadurch gekennzeichnet, dass** bei einer Betätigung des Bedienelements (8, 5, 6, 19) eine Entfernung und/oder eine Fahrtdauer und/oder eine Himmelsrichtung (21) von der aktuellen Position des Fahrzeugs zu der gespeicherten Position anzeigbar ist.

7. Navigationsvorrichtung nach einem der vorhergehenden Ansprüche, **dadurch gekennzeichnet, dass** das Bedienelement mindestens eine Drucktaste (8) aufweist.

8. Navigationsvorrichtung nach Anspruch 7, **dadurch gekennzeichnet, dass** das Bedienelement aus zwei benachbarten Tasten (5, 6) gebildet ist und dass das Bedienelement (5, 6) mit einer zumindest ungefähr gleichzeitigen Betätigung der benachbarten Tasten (5, 6) betätigt ist.

9. Navigationsvorrichtung nach einem der vorhergehenden Ansprüche, **dadurch gekennzeichnet, dass** das Bedienelement ein Auswahlfeld (19) einer Bedienoberfläche (13) ist.

## Claims

1. Navigation apparatus for navigating a vehicle, particularly in a road network, wherein a journey route from a starting point to a destination can be calculated, wherein a current position for the vehicle can be ascertained by the navigation apparatus, and wherein a position can be stored by operating an operator control element, **characterized in that** operation of the operator control element (8, 5, 6, 19) again can be used to input the stored position into the navigation apparatus (1) as a journey destination.

2. Navigation apparatus according to Claim 1, **characterized in that** operation of the operator control element (8, 5, 6, 19) for at least one prescribed period can be used to store a current position (12) for the vehicle.

3. Navigation apparatus according to one of the preceding claims, **characterized in that** the navigation apparatus (1) is connected to a display (2), **in that** the display (2) can be used to display location names, addresses and/or geographical points, and **in that** operation of the operator control element (8, 5, 6, 19) for at least one prescribed period can be used to store a position for a selected location name, for an address and/or for a geographical point.

4. Navigation apparatus according to one of the preceding claims, **characterized in that** a map (10) can be shown in the display (2) and **in that** the stored position (17) can be shown in the map (10) in highlight.

5. Navigation apparatus according to one of the preceding claims, **characterized in that** the input of the stored position as a journey destination can be used to automatically start routing from the current position (12) of the vehicle to the stored position.

6. Navigation apparatus according to one of the preceding claims, **characterized in that** operation of the operator control element (8, 5, 6, 19) allows display of a distance and/or a journey time and/or a compass bearing (21) from the current position of the vehicle to the stored position.

7. Navigation apparatus according to one of the preceding claims, **characterized in that** the operator control element has at least one pushbutton (8).

8. Navigation apparatus according to Claim 7, **characterized in that** the operator control element is formed from two adjacent keys (5, 6) and **in that** the operator control element (5, 6) is operated by means of at least approximately simultaneous operation of the adjacent keys (5, 6).

9. Navigation apparatus according to one of the preceding claims, **characterized in that** the operator control element is a selection field (19) on a user interface (13).

## Revendications

1. Dispositif de navigation pour la navigation d'un véhicule, notamment dans un réseau routier, un itinéraire de déplacement entre un point de départ et un point de destination pouvant être calculé, une position actuelle du véhicule pouvant être déterminée par le dispositif de navigation, une position pouvant être mémorisée en actionnant un élément de commande, **caractérisé en ce que** la position mémorisée peut être validée comme destination du déplacement dans le dispositif de navigation (1) par un nouvel actionnement de l'élément de commande (8, 5, 6, 19).

2. Dispositif de navigation selon la revendication 1, **caractérisé en ce que** la position actuelle (12) du véhicule peut être mémorisée en actionnant l'élément de commande (8, 5, 6, 19) pendant au moins une durée prédéfinie.

3. Dispositif de navigation selon l'une des revendications précédentes, **caractérisé en ce que** le dispositif de navigation (1) est relié avec un afficheur (2), que des désignations de site, des adresses et/ou des points géographiques peuvent être affichés sur l'afficheur (2) et qu'une position d'une désignation de site, d'une adresse et/ou d'un point géographique sélectionné peut être mémorisée en actionnant l'élément de commande (8, 5, 6, 19) pendant au moins une durée prédéfinie.

4. Dispositif de navigation selon l'une des revendications précédentes, **caractérisé en ce qu'**une carte (10) peut être représentée sur l'afficheur (2) et que la position mémorisée (17) peut être représentée en étant mise en valeur dans la carte (10).

5. Dispositif de navigation selon l'une des revendications précédentes, **caractérisé en ce qu'**un guidage sur l'itinéraire entre la position actuelle (12) du véhicule et la position mémorisée peut être démarré automatiquement par la saisie de la position mémorisée en tant que destination du déplacement.

6. Dispositif de navigation selon l'une des revendications précédentes, **caractérisé en ce qu'**une distance et/ou une durée de déplacement et/ou une orientation (21) de la position actuelle du véhicule vers la position mémorisée peuvent être affichées lors d'un actionnement de l'élément de commande (8, 5, 6, 19).

7. Dispositif de navigation selon l'une des revendications précédentes, **caractérisé en ce que** l'élément de commande présente au moins une touche (8).

8. Dispositif de navigation selon la revendication 7, **caractérisé en ce que** l'élément de commande est formé de deux touches (5, 6) voisines et que l'élément de commande (5, 6) est actionné en actionnant au moins à peu près simultanément les touches voisines (5, 6).

9. Dispositif de navigation selon l'une des revendications précédentes, **caractérisé en ce que** l'élément de commande est une zone de sélection (19) d'une interface utilisateur (13).
